# EUROPEAN PATENT APPLICATION

(11) **EP 4 822 567 A1**
(43) Date of publication of application: **14.10.2026**
(21) Application number: 25168915.4
(22) Date of filing: 07.04.2025
(51) Int. Cl.: G06F 21/44, B64F 5/60, H04L 9/40, H04L 67/12, H04L 9/32, B64D 11/00

(54) **METHOD FOR OPERATING AN AUTONOMOUS CERTIFICATE MANAGEMENT SYSTEM FOR TECHNICAL DEVICES PLACED IN A VEHICLE; SYSTEM FOR VEHICLES, PARTICULARLY FOR AN AIRCRAFT**

(71) Applicant: Airbus S.A.S., 31700 Blagnac (FR)
(72) Inventor: DE CARVALHO BERTOLI, Gustavo, 82024 Taufkirchen (DE); SCIAMMETTA, Nunzio, 82024 Taufkirchen (DE); VYAS, Nilesh, 82024 Taufkirchen (DE)
(74) Representative: Isarpatent

(57) **Abstract**

The present invention relates to method (M) for operating an autonomous certificate management system for technical devices placed in a vehicle, particularly in an aircraft (100), comprising: providing in a vehicle an onboard certificate management system (OCMS) (1) which is designed to be coupled with at least one technical device (4) to be placed within the vehicle, providing to the OCMS (1) a respective list of information from respective technical devices (4) to be placed in the vehicle, qualifying respective technical devices (4) to be placed within the vehicle with a certificate signing request method (5) which is designed to determine at least one unique information about the respective technical device (4) and to transmit a created certificate signing request (CSR) comprising the at least one unique information to the OCMS (1), creation and transmission of a digital certificate by the OCMS (1) to the respective technical device (4) depending on a comparison of stored and received information about the respective technical device (4) in the OCMS (1) carried out by the OCMS (1). In addition, a system (2) for vehicles and an aircraft (100) according to the invention are presented.

## Description

### TECHNICAL FIELD OF THE INVENTION

The present invention pertains to a method for operating an autonomous certificate management system for technical devices placed in a vehicle, particularly in an aircraft. Furthermore, the present invention pertains to a system for vehicles, particularly for an aircraft, and to an aircraft comprising means to run a method according to the invention or a system according to the invention.

### TECHNICAL BACKGROUND

The infrastructure on board modern passenger aircraft and other transport vehicles is increasingly characterized by technical equipment and similar components. The technical equipment and corresponding components are often networked and usually integrated into a higher-level digital environment.

In this context, it is important to adhere to certain security standards, particularly with regard to the control and, above all, approval of the respective technical equipment and components to this higher-level digital environment. Among other things, digital certificates are used, which, once issued and deposited, make the respective devices and components clearly identifiable and thus support a certain control function. Today usage of digital certificates inside the aircraft is therefore very similar to traditional IT systems. The technical equipment and components, also known as onboard devices, have in this case respectively its own digital certificate, which is in most cases emitted by a trusted and external third party, which is called certificate authority (CA).

In addition, these onboard devices also rely on a certificate revocation list (CRL) and have a copy of the digital certificate of this trusted and external third-party entity (i.e. CA Public Key). The certificate authority (CA) is always intended to be stationed outside the aircraft, which accordingly represents the trusted and external third-party in this security concept. For the implementation of this previously planned security concept, with a CA located outside the aircraft, manual interaction is required from a so-called *"device sponsor",* who carries out the registration and approval of new onboard devices. The *"device sponsor"* is predominantly represented by an external IT specialist stationed on the ground.

Automating routines carried out on the ground in this context is considered to involve considerable expenditure to achieve the desired high level of security and safety. This current state of art is applicable to the current scenario of maximum dozens of devices onboard the aircraft and rely on the aircraft external connectivity through gatelink interface. Even though manual steps for device provisioning are required. From a digital certificates management perspective, the prior art will introduce bottlenecks in a future context with hundreds of devices being installed inside the aircraft.

Additionally, Public Key Infrastructure (PKI) and digital certificates serve as a foundational element for so called zero-trust architectures. However, the current reliance on certificates issued by public certificate authorities (CAs) presents several challenges.

The anticipated proliferation of certificates, driven by the increasing number of devices and the necessity for frequent rotations and dynamic policy adjustments, exacerbates these issues. Especially from the perspective of usage of a CA, the following primary challenges can be seen as challenging. First, there is a certain lack of automation nowadays.

The manual processes involved in certificate management hinder scalability and efficiency and therefore can be nominated as a significant cost driver. Secondly, the absence of short-lived certificates complicates the implementation of agile security practices. This is due, among other things, to the fact that the use of short-lived certificates would require cost-intensive ground operations, as device sponsors would also have to be present at various bases to ensure the associated support.

Furthermore, there is a deficiency in supporting custom metadata, such as extensions for micro-segmentation or fine-grained authorization. Finally, the current systems used in the processes mentioned above lack the necessary flexibility and programmability to adapt to evolving security requirements.

### SUMMARY OF THE INVENTION

Against this background, it is an object of the present invention to provide a method, a system and an aircraft which at least partially overcome the aforementioned disadvantages.

This object is achieved by a method having the features of claim 1 and a system having the features of claim 12 as well as by an aircraft having the features of claim 15.

According to the invention, a method for operating an autonomous certificate management system for technical devices placed in a vehicle, particularly in an aircraft, comprises: providing in a vehicle an onboard certificate management system (OCMS) which is designed to be coupled with at least one technical device to be placed within the vehicle, providing to the OCMS a respective list of information from respective technical devices to be placed in the vehicle, qualifying respective technical devices to be placed within the vehicle with a certificate signing request method which is designed to determine at least one unique information about the respective technical device and to transmit a created certificate signing request (CSR) comprising the at least one unique information to the OCMS, creation and transmission of a digital certificate by the OCMS to the respective technical device depending on a comparison of stored and received information about the respective technical device in the OCMS carried out by the OCMS.

Furthermore, according to the invention, a system for vehicles, particularly for an aircraft, is presented. Such a system comprises an onboard certificate management system (OCMS) which is designed to be coupled with at least one technical device to be placed within the vehicle and which comprises a respective list of information from respective technical devices to be placed in the vehicle, wherein the OCMS is further designed to create and transmit digital certificates by the OCMS to the respective technical device depending on a comparison of stored and received information about the respective technical device in the OCMS carried out by the OCMS.

Furthermore, according to the invention, an aircraft is disclosed which
comprises means to run a method according to the invention or a system according to the invention.

An idea of the present invention is therefore to propose a mechanism to retrieve a unique identifier from devices, for example from internet of things devices (IoT-devices) or the like, to bind it to this specific device through digital certificates with keys generated onboard by each device and guarantee that it matches the expected vehicle's (for example an aircraft) controlled configuration during the certificate issuance process (assertion).

This mechanism can be foreseen automatically. To enable all this automation, the invention consists for example of a system acting as a custom certified authority (CA) that is required to process all the identity attributes according to the expected vehicle (for example aircraft) configuration and to process those custom extensions. In contrast to nowadays solutions, it aims to support the increasing number of loT-devices or the like inside the aircraft relying on certificates.

Furthermore, it brings flexibility and programmability in the management of digital certificates inside vehicles (for example an aircraft). In addition, it enables the loT-devices to not need keeping a certificate revocation list (CRL) copy, freeing up those devices on storage demand once CRLs tend to increase in size according to the number of devices and time. The invention can act as an onboard CA and is capable of managing those devices' certificates onboard with minimal manual interactions, and can be capable of being tailored to the specificities of non-critical safety applications.

The method or the system described in the invention can make the management of digital certificates easier, less manual error-prone and flexible. A particular advantage is that the method or the system described in the invention can enable automatic enrollment of loT-devices or the like inside the vehicle (for example the aircraft), removing the need of manual steps for device management (certificate enrolment, issuance, validity checks and so on).

Furthermore, the method or the system described in the invention can reduce reliance on external connectivity for digital certificates management. The method or the system described in the invention can also enable with advantage customization (programmability, flexibility) through custom digital certificate extensions and can reduce storage from loT-devices or the like by relying on an internal system to check for certificate status, instead of carrying a CRL copy. This invention can also reduce human effort on vehicle (for example on aircrafts) digital certificates management tasks.

The invention acts like a certification authority (CA) inside the vehicle (for example inside the aircraft). This CA can also be known as an *"onboard CA"* on the server-side, in contrast with the traditional public CA approach outside the vehicle (for example outside the aircraft). Additionally, on each device to be connected, a software agent (client-side), for example in the form of a sub-method or the like, can be responsible for identity attributes retrieval and all the interfaces with the onboard CA (server-side).

The advantages mentioned above also apply, to the extent that they are transferable, to the system according to the invention and to the aircraft according to the invention.

According to a further embodiment of the invention it is provided that the creation and transmission routine starts autonomously once the respective technical device is coupled to the OCMS. In this way, a particularly user-friendly method can be provided, which can be operated with little effort and thus cost-effectively during operation.

According to a further embodiment of the invention it is provided that the respective list of information from respective technical devices comprises at least one unique information about the respective technical devices. A particularly individualized comparison based on this at least one unique piece of information about the respective technical devices can thus be carried out, so that a particularly secure assignment of certificates can be ensured even better.

According to a further embodiment of the invention it is provided that at least one unique information is selected from: part number, serial number, network interface MAC address. The previously mentioned advantages can thus be achieved even better.

According to a further embodiment of the invention it is provided that the certificate signing request method comprises furthermore: adding at least one additional vehicle information about the vehicle to the respective unique information about the respective technical devices and wherein this at least one additional vehicle information is stored in the OCMS so that the comparison will be based additionally on this at least one additional vehicle information. This extension of the method according to the invention offers the further advantage that an even more secure assignment routine can be provided and applied within the vehicle.

According to a further embodiment of the invention it is provided that the OCMS is at least partially a virtual machine which can be implemented in a higher-level server architecture or wherein the OCMS is at least partially virtualized so that it can be implemented in a higher-level server architecture. The OCMS implemented in this way can be integrated into an existing infrastructure with exceptional flexibility. The need for additional hardware components can be minimized or even eliminated entirely, ultimately resulting in a particularly cost-effective method. The term *"virtualized"* comprises all possible technical solutions to provide the respective OCMS in the form of a virtual configuration. This can be expressed in forms of at least partially containerized solutions or the like.

According to a further embodiment of the invention it is provided that the OCMS is designed to actively perform at least one monitoring task routine to control the monitoring of the technical devices with regard to their respective digital certificates. At any time, the method according to the invention in this embodiment thus offers a particularly simple and effective way for a user to understand and review the current and past activities related to the certificate award process, if desired.

According to a further embodiment of the invention it is provided that the monitoring task routine is selected from: checking if multiple certificate signing requests from the same technical device exist; checking if a certificate signing request from an unknown technical device regarding stored information within the OCMS exist. The method can thus provide high-quality results, as it enables a kind of self-regulating and error-detecting method.

According to a further embodiment of the invention it is provided that the OCMS is designed to perform at least one additional certificate authority task selected from: Managing revocations of respective digital certificates; checking current status of respective digital certificates; distribution of public certificates to the respective technical devices. A self-regulating process for issuing and controlling certificates in a manageable environment can thus be advantageously realized using the method according to the invention.

According to a further embodiment of the invention it is provided that the OCMS comprises a digital certificate revocation list and wherein the OCMS is designed to maintain this digital certificate revocation list while creation and transmission of a digital certificate to respective technical devices. By means of such a list, transparent certificate award processes can be easily and user-friendly tracked, so that despite all levels of automation within the method according to the invention, controlling interventions are possible at any time based on the information provided.

According to a further embodiment of the invention it is provided that communication between the OCMS and the respective technical devices is at least partially based on radio transmission technology, particularly based on wireless access point technology or wherein communication between the OCMS and the respective technical devices is at least partially based on connecting wire devices or wherein communication between the OCMS and the respective technical devices is at least partially based on radio transmission technology, particularly based on wireless access point technology and/or is at least partially based on connecting wire devices. In this way, different spatial concepts can be implemented flexibly and without major additional expenditure with regard to the components to be used within the method. Connecting wire devices can be for example provided as standard electric cables or the like. Depending on the location of use, the best possible combination of connections can be provided, so that reliable operation is advantageously possible using the method according to the invention.

According to a further embodiment of the invention it is provided that the OCMS is at least partially a virtual machine which can be implemented in a higher-level server architecture or wherein the OCMS is at least partially virtualized so that it can be implemented in a higher-level server architecture. The system implemented in this way can be integrated into an existing infrastructure with exceptional flexibility. The need for additional hardware components can be minimized or even eliminated entirely, ultimately resulting in a particularly cost-effective system. The term *"virtualized"* comprises all possible technical solutions to provide the respective OCMS in the form of a virtual configuration. This can be expressed in forms of at least partially containerized solutions or the like.

According to a further embodiment of the invention it is provided that the OCMS comprises a digital certificate revocation list and wherein the OCMS is designed to maintain this digital certificate revocation list while creation and transmission of a digital certificates to respective technical devices and/or wherein the is OCMS is designed so that communication between the OCMS and the respective technical devices is at least partially based on radio transmission technology, particularly based on wireless access point technology or wherein the OCMS is designed so that communication between the OCMS and the respective technical devices is at least partially based on connecting wire devices or wherein the OCMS is designed so that communication between the OCMS and the respective technical devices is at least partially based on radio transmission technology, particularly based on wireless access point technology and/or is at least partially based on connecting wire devices.

By means of such a list, transparent certificate award processes can be easily and user-friendly tracked, so that despite all levels of automation within the system according to the invention, controlling interventions are possible at any time based on the information provided. In this way, different spatial concepts can be implemented flexibly and without major additional expenditure with regard to the components to be used within the system.

### BRIEF SUMMARY OF THE DRAWINGS

The present invention is explained in more detail below with reference to the exemplary embodiments shown in the schematic figures:
- FIG. 1: shows a schematic flow diagram for a method for operating an autonomous certificate management system for technical devices placed in a vehicle, particularly in an aircraft;
- FIG. 2: shows a schematic view of a system for a vehicle during use in a vehicle interior;
- FIG. 3: shows another schematic view of a system for a vehicle during use in a vehicle interior;
- FIG. 4: shows a schematic flowchart of an enrolment process of an OCMS;
- FIG. 5: shows a schematic view of an aircraft according to the invention.

In the figures of the drawing, identical, functionally identical and acting elements, features and components are provided with the same reference symbols, unless otherwise stated.

### DESCRIPTION OF EXEMPLARY EMBODIMENTS

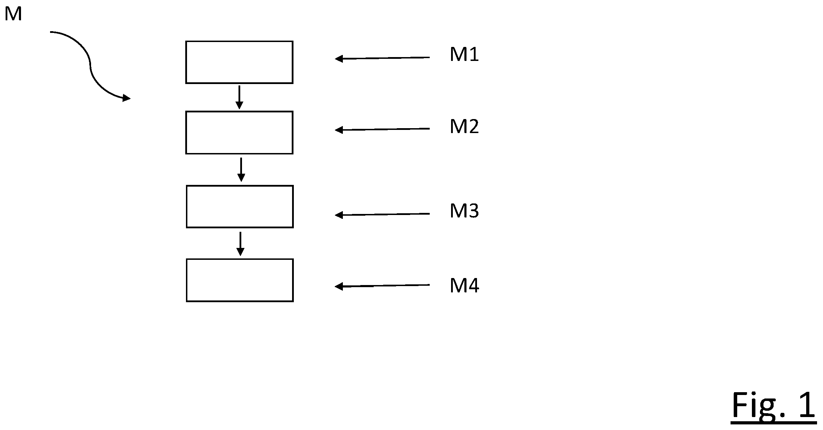

FIG. 1 shows a schematic flow diagram for a method for operating an autonomous certificate management system for technical devices placed in a vehicle, particularly in an aircraft. In a first method step M1 an onboard certificate management system (OCMS) (1) which is designed to be coupled with at least one technical device to be placed within the vehicle is provided in a vehicle.

In a second method step M2 a respective list of information from respective technical devices to be placed in the vehicle is provided to the OCMS (1).

In a third method step M3 respective technical devices to be placed within the vehicle are qualified with a certificate signing request method which is designed to determine at least one unique information about the respective technical device and to transmit a created certificate signing request (CSR) comprising the at least one unique information to the OCMS (1).

In a fourth method step M4 creation and transmission of a digital certificate by the OCMS (1) to the respective technical device are carried out depending on a comparison of stored and received information about the respective technical device in the OCMS (1) carried out by the OCMS (1).

It is conceivable that the certificate signing request method is designed in such a way that, in the case of missing public keys for the respective technical devices, it supplements them accordingly if this is considered sensible and necessary. The certificate signing request method can also be described as a certain device agent which empowers the respective technical devices to start the desired process. In more detail and in a particular possible embodiment within the boundaries of the presented invention, the following can be seen as possible routine: For a new device enrolment, the device agent self-retrieves unique identifiers to bind it to this specific device through a new digital certificate.

In addition to the unique identifiers, this agent is also responsible for the cryptographic key's generation. Once both identity attributes and keys are generated by the device agent, the agent generates a certificate signing request (CSR) based on this and forward to OCMS as part of the traditional PKI certificate request (PKI = Public Key Infrastructure). On the OCMS side, in addition to the cryptographic checks, OCMS performs a check on the identity-attributes provided to guarantee that the specific device matches the expected vehicle's configuration (for example the aircraft's configuration) (i.e. attestation), if this device matches the expected configuration, then the digital certificate is provided to the device.

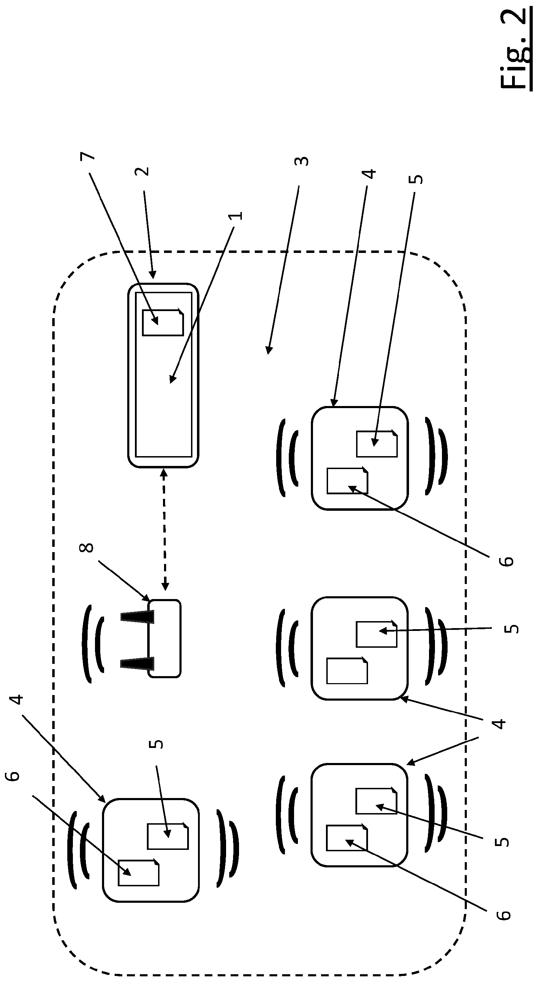

FIG. 2 shows a schematic view of a system 2 for a vehicle during use in a vehicle interior 3. The vehicle could be, for example, a train or an aircraft or the like. The system 2 is shown with an onboard certificate management system (OCMS) 1 which is designed to be coupled with at least one of the shown four technical devices 4 to be placed within the vehicle interior 3 and which comprises a respective list of information from respective technical devices 4 to be placed in the vehicle interior 3. The OCMS 1 is further designed to create and transmit digital certificates by the OCMS 1 to the respective technical device 4 depending on a comparison of stored and received information about the respective technical device in the OCMS 1 carried out by the OCMS 1.

The respective four technical devices 4 are shown in this special embodiment with respective certificate signing request methods 5 which are respectively functionally integrated into each technical device 4. This certificate signing request method 5 is designed to determine at least one unique information about the respective technical device 4 and to transmit a created certificate signing request (CSR) comprising of the at least one unique information to the OCMS 1. Each of the four technical devices 4 are shown with a CA public key 6. These respective CA public keys 6 can be provided in the form of a prior provisioning process. Alternatively, the respective technical devices 4 can be provided with this information directly from the OCMS 1.

In addition, the OCMS 1 is shown in this special embodiment with a digital certificate revocation list 7. The OCMS 1 can be designed to maintain this digital certificate revocation list 7 while creation and transmission of digital certificates to respective technical devices 4.

The four technical devices 4 can be, in the case that the vehicle is an aircraft, typical interior devices. These interior devices can be, for example, gallery inserts, seats, cabin crew devices, aircraft subsystems, lavatories and IFE (IFE = In-flight Entertainment).

The OCMS 1 can be, in an embodiment not shown in more detail, at least partially a virtual machine which can be implemented in a higher-level server architecture. Alternatively, the OCMS 1 can be at least partially virtualized so that it can be implemented in a higher-level server architecture. This higher-level server architecture can be, for example, a typical device which is implemented into the vehicle interior 3 of vehicles. In case the vehicle is an aircraft, this higher-level server architecture can be, for example, a typical aircraft server.

In FIG. 2, the OCMS 1 is further designed so that communication between the OCMS 1 and the respective technical devices 4 is at least partially based on radio transmission technology, particularly based on wireless access point technology. The OCMS 1 is connected to a wireless access point 8. This wireless access point 8 ensures that secure data transmission or similar can be carried out between the OCMS and the technical devices. As the dashed arrow indicates, data transmission is possible in both directions. In an embodiment not shown in detail, it is conceivable that communication between the OCMS 1 and the respective technical devices 4 is at least partially based on connecting wire devices or wherein communication between the OCMS 1 and the respective technical devices 4 is at least partially based on radio transmission technology, particularly based on wireless access point technology and/or is at least partially based on connecting wire devices. The connecting wire devices can, for example, be provided in the form of conventional electrical connecting cables. In particular, such electrical connecting cables can be designed in the same way as they are commonly used in any automotive industry for common connection tasks. It is also conceivable that these electrical connecting cables can be highly specialized and designed using special materials or material alloys. Instead of the wireless access point 8 any alternative transmission means may be provided, for example in the form of separate transmission means that do not use necessarily WiFi technology.

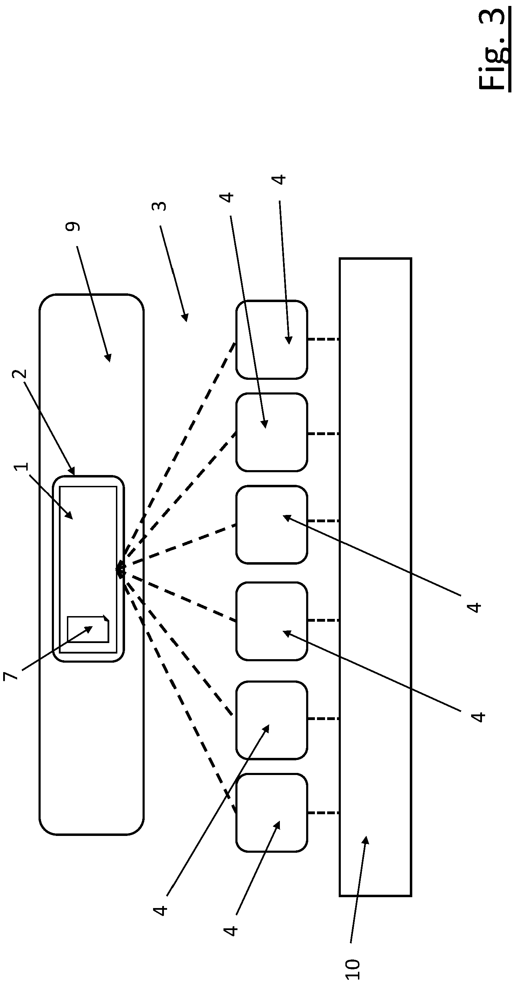

FIG. 3 another schematic view of a system 2 for a vehicle during use in a vehicle interior 3. In this embodiment, the system 2 is shown with an OCMS 1 which comprises a digital certificate revocation list 7. The OCMS 1 can be designed to maintain this digital certificate revocation list 7 while creation and transmission of a digital certificates to respective technical devices 4. The respective technical devices 4 are shown related to the image plane below the OCMS 1 wherein these technical devices 4 can be for example, gallery inserts, seats, cabin crew devices, aircraft subsystems, lavatories and IFE (IFE = In-flight Entertainment).

The respective technical devices 4 can be provided in further embodiments not shown in detail by further devices to be placed in the vehicle interior 3. The dashed lines show the respective connections of the respective technical devices 4 to the OCMS 1. These connections are important so that the digital certificates management (e. g. enrolment, renewal, status checking and the like) can be performed in the sense of the present invention.

These can be radio-based connections or physical connections, such as data cables or the like. In this shown embodiment, the system 2 and the OCMS 1 are both integrated into a shown vehicle server 9. This vehicle server 9 can be an aircraft server in the case, that the vehicle is an aircraft.

In relation to the image plane, below the respective technical devices 4 a network infrastructure 10 (for example in the form of a data link layer or the like) is shown. The respective technical devices 4 are designed to be connected to this network infrastructure 10 wherein an authentication and/or authorization to this network infrastructure 10 can be provided based on the received digital certificates (e. g. EAP-TLS, WPA Enterprise). The respective technical devices 4 can comprise respectively a device security component (not shown in more detail) which stores the digital certificate and/or additional keys components and the like. Instead of the network infrastructure 10 a common data backbone (network/transport/ session/application layers etc.) relying on digital certificates can be provided (e. g. IPSec, MOTTS, HTTPS).

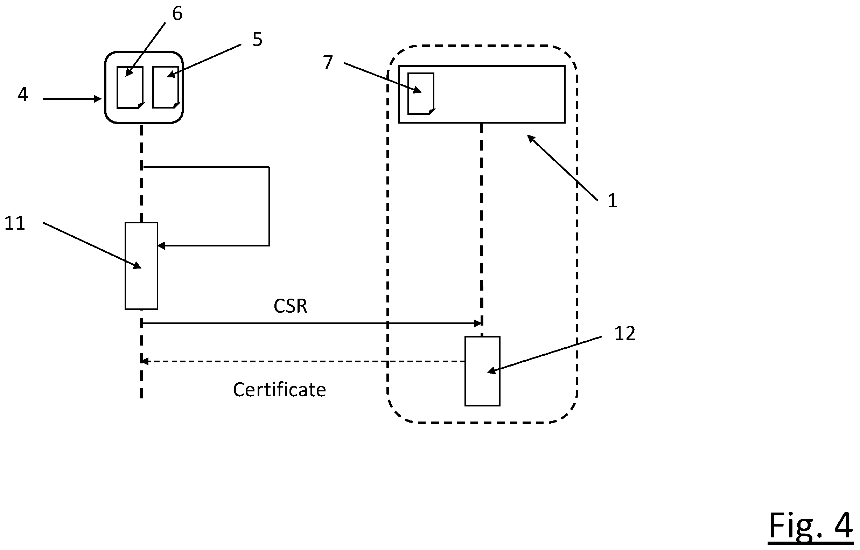

FIG. 4 shows a schematic flowchart of an enrolment process of an OCMS 1. A OCMS 1 is shown and technical device 4 with a respective certificate signing request method 5 which is functionally integrated into the technical device 4. The OCMS 1 is also shown with a digital certificate revocation list 7. The OCMS 1 can be designed to maintain this digital certificate revocation list 7 while creation and transmission of a digital certificates to respective technical devices 4.

The technical device 4 shown can be for example, gallery inserts, seats, cabin crew devices, aircraft subsystems, lavatories and IFE (IFE = In-flight Entertainment). The shown certificate signing request method 5 is designed to determine at least one unique information about the respective technical device 4 and to transmit a created certificate signing request (CSR) comprising of at least one unique information to the shown OCMS 1. In addition, the technical device 4 is shown with a CA public key 6. These respective CA public keys 6 can be provided in the form of a prior provisioning process. Alternatively, the respective technical devices 4 can be provided with this information directly from the OCMS 1.

The enrolment process starts at the technical device 4. It is conceivable that the certificate signing request method 5 will be transferred to the technical device 4 before this process starts. It is also conceivable that the certificate signing request method 5 is already implemented to the technical device 4 before this process starts.

In this flowchart a first virtual data processing symbol 11 represents retrieving unique identifiers and generating the CSR. This CSR is then transferred to the OCMS 1. A second virtual data processing symbol 12 represents checking configuration control and extensions so that creation and transmission of a digital certificate by the OCMS 1 to the technical device 4 depending on a comparison of stored and received information about the respective technical device 4 in the OCMS 1 can be carried out by the OCMS 1.

In contrast to the state of the art, fewer process steps are necessary and manual steps can also be eliminated due to the possibility of extensive automation. Furthermore, no external connectivity is required. The procedure is also crypto-agile. Also, this procedure enables short-lived certificates (zero-trust concepts). It also enables identity assertion as part of the process (enrolment, renewal).

For renewal processes of the digital certificate, the OCMS 1 can comprise a custom application programming interface (API) or can be designed to run the renewal processes of the digital certificate on behalf a basic version of this OCMS 1. The same applies to the enrollment processes in connection with the respective technical devices 4 or revocation processes in connection with the respective technical devices 4. The OCMS 1 can be in certain embodiments an onboard Sub CA. During the revocation processes, the OCMS 1 can manage the CRL and status checking in a single point not requiring to push technical devices 4. In addition, a similar OCSP (Online Certificate Status Protocol) can also be provided for supporting or only supervising the mentioned processes.

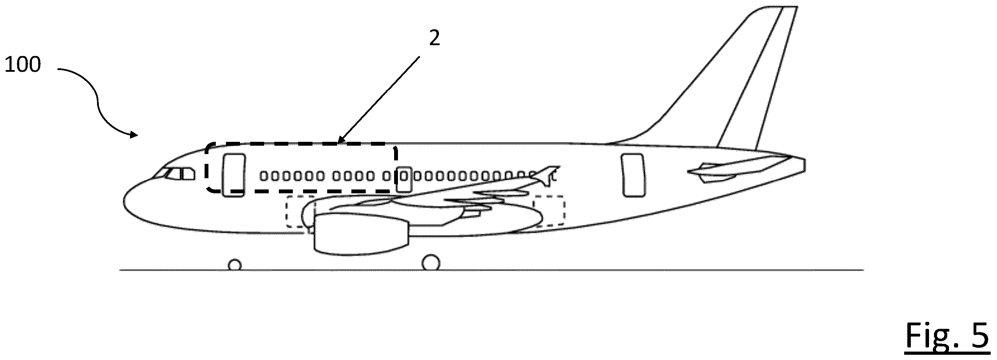

FIG. 5 shows an aircraft 100 with the inventive system 2. In an alternative embodiment this aircraft 100 can comprise means to run the inventive method M.

### LIST OF REFERENCE SYMBOLS

- 1: OCMS
- 2: system
- 3: vehicle interior
- 4: technical device
- 5: certificate signing request method
- 6: CA public key 6
- 7: digital certificate revocation list
- 8: wireless access point
- 9: vehicle server
- 10: network infrastructure
- 11: first virtual data processing symbol
- 12: second virtual data processing symbol
- M: method for operating an autonomous certificate management system for technical devices placed in a vehicle
- M1: first method step
- M2: second method step
- M3: third method step
- M4: fourth method step
- 100: aircraft

## Claims

1. Method (M) for operating an autonomous certificate management system for technical devices placed in a vehicle, particularly in an aircraft, comprising:
• providing (M1) in a vehicle an onboard certificate management system (OCMS) (1) which is designed to be coupled with at least one technical device (4) to be placed within the vehicle;
• providing (M2) to the OCMS (1) a respective list of information from respective technical devices (4) to be placed in the vehicle;
• qualifying (M3) respective technical devices to be placed within the vehicle with a certificate signing request method (5) which is designed to determine at least one unique information about the respective technical device (4) and to transmit a created certificate signing request (CSR) comprising the at least one unique information to the OCMS (1);
• creation and transmission (M4) of a digital certificate by the OCMS (1) to the respective technical device (4) depending on a comparison of stored and received information about the respective technical device (4) in the OCMS (1) carried out by the OCMS (1).

2. Method (M) according to claim 1, wherein the creation and transmission routine starts autonomously once the respective technical device (4) is coupled to the OCMS (1).

3. Method (M) according to one of the preceding claims, wherein the respective list of information from respective technical devices (4) comprises at least one unique information about the respective technical devices (4).

4. Method (M) according to one of the preceding claims, wherein at least one unique information is selected from: part number, serial number, network interface MAC address.

5. Method (M) according to one of the preceding claims, wherein the certificate signing request method (5) comprises furthermore: adding at least one additional vehicle information about the vehicle to the respective unique information about the respective technical devices (4) and wherein this at least one additional vehicle information is stored in the OCMS (1) so that the comparison will be based additionally on this at least one additional vehicle information.

6. Method (M) according to one of the preceding claims, wherein the OCMS (1) is at least partially a virtual machine which can be implemented in a higher-level server architecture or wherein the OCMS (1) is at least partially virtualized so that it can be implemented in a higher-level server architecture.

7. Method (M) according to one of the preceding claims, wherein the OCMS (1) is designed to actively perform at least one monitoring task routine to control the monitoring of the technical devices (4) with regard to their respective digital certificates.

8. Method (M) according to claim 7, wherein the monitoring task routine is selected from: checking if multiple certificate signing requests from the same technical device exist; checking if a certificate signing request from an unknown technical device regarding stored information within the OCMS (1) exist.

9. Method (M) according to one of the preceding claims, wherein the OCMS (1) is designed to perform at least one additional certificate authority task selected from: Managing revocations of respective digital certificates; checking current status of respective digital certificates; distribution of public certificates to the respective technical devices (4).

10. Method (M) according to one of the preceding claims, wherein the OCMS (1) comprises a digital certificate revocation list (7) and wherein the OCMS (1) is designed to maintain this digital certificate revocation list (7) while creation and transmission of a digital certificate to respective technical devices (4).

11. Method (M) according to one of the preceding claims, wherein communication between the OCMS (1) and the respective technical devices (4) is at least partially based on radio transmission technology, particularly based on wireless access point technology or wherein communication between the OCMS (1) and the respective technical devices (4) is at least partially based on connecting wire devices or wherein communication between the OCMS (1) and the respective technical devices (4) is at least partially based on radio transmission technology, particularly based on wireless access point technology and/or is at least partially based on connecting wire devices.

12. System (2) for vehicles, particularly for an aircraft, comprising an onboard certificate management system (OCMS) (1) which is designed to be coupled with at least one technical device (4) to be placed within the vehicle and which comprises a respective list of information from respective technical devices (4) to be placed in the vehicle, wherein the OCMS (1) is further designed to create and transmit digital certificates by the OCMS (1) to the respective technical device (4) depending on a comparison of stored and received information about the respective technical device (4) in the OCMS (1) carried out by the OCMS (1).

13. System (2) according to one of the claim 12, wherein the OCMS (1) is at least partially a virtual machine which can be implemented in a higher-level server architecture or wherein the OCMS (1) is at least partially virtualized so that it can be implemented in a higher-level server architecture.

14. System (2) according to one of the claims 12 or 13, wherein the OCMS (1) comprises a digital certificate revocation list (7) and wherein the OCMS (1) is designed to maintain this digital certificate revocation list (7) while creation and transmission of a digital certificates to respective technical devices (4) and/or wherein the OCMS (1) is designed so that communication between the OCMS (1) and the respective technical devices (4) is at least partially based on radio transmission technology, particularly based on wireless access point technology or wherein the OCMS (1) is designed so that communication between the OCMS (1) and the respective technical devices (4) is at least partially based on connecting wire devices or wherein OCMS (1) is designed so that communication between the OCMS (1) and the respective technical devices (4) is at least partially based on radio transmission technology, particularly based on wireless access point technology and/or is at least partially based on connecting wire devices.

15. Aircraft (100) comprising means to run a method (M) according to one of claims 1 to 11 or a system (2) according to one of claims 12 to 14.
